# EUROPÄISCHE PATENTSCHRIFT

(11) **EP 4 404 868 B1**
(45) Veröffentlichungstag und Bekanntmachung des Hinweises auf die Patenterteilung: **11.06.2025**
(21) Anmeldenummer: 22786929.4
(22) Anmeldetag: 21.09.2022
(51) Int. Cl.: A61C 17/02, A61C 13/15

(54) **DENTALMEDIZINISCHE KANÜLE FÜR DENTALSPRITZE ZUR ABGABE VON MEDIEN UND HERSTELLUNGSVERFAHREN FÜR EINE DENTALMEDIZINISCHE KANÜLE**
DENTAL CANNULA FOR DENTAL SYRINGE FOR DISCHARGING MEDIA AND MANUFACTURING METHOD FOR A DENTAL CANNULA
CANULE DENTAIRE POUR UNE SERINGUE DENTAIRE POUR ÉVACUER DES SUBSTANCES ET PROCÉDÉ DE FABRICATION D'UNE CANULE DENTAIRE

(30) Priorität: 23.09.2021 DE 102021124619
(43) Veröffentlichungstag der Anmeldung: 31.07.2024
(73) Patentinhaber: KaVo Dental GmbH, 88400 Biberach an der Riss (DE)
(72) Erfinder: DANGEL, Klaus, 88400 Biberach (DE); HECKENBERGER, Hans, 88433 Schemmerhofen (DE)
(74) Vertreter: Thun, Clemens
(86) Internationale Anmeldenummer: PCT/EP2022/076147
(87) Internationale Veröffentlichungsnummer: WO 2023/046708

(56) Entgegenhaltungen:
- US-A1- 2020 290 066

## Beschreibung

Die vorliegende Erfindung betrifft eine dentalmedizinische Kanüle, die zur Abgabe von fluiden Medien wie z.B. Luft und/oder Wasser vorgesehen ist. Die erfindungsgemäße Kanüle ist hierbei zur Verwendung mit sog. zahnmedizinischen Spritzhandstücken vorgesehen. Hierbei wird die erfindungsgemäße medizinische Kanüle als ein Aufsatzstück für ein sog. zahnmedizinische Spritzhandstück als Dentalspritzenaufsatz angesehen.

Sog. Spritzhandstücke oder Multifunktionshandstücke kommen im Dentalbereich häufig zum Einsatz und dienen dazu, zahnmedizinische Untersuchungen oder Behandlungen zu unterstützen. Die Spritzhandstücke werden hierbei dazu verwendet, auf einen zu untersuchenden oder zu behandelnden Bereich Luft, Wasser oder ggf. ein Luft-Wasser-Gemisch in Form eines Sprays abzugeben, um den Bereich zu reinigen und ggf. zu trocknen. Hierdurch ist jederzeit eine gute Sichtbarkeit der zu untersuchenden oder zu behandelnden Stelle gewährleistet, weshalb der regelmäßige Einsatz derartiger Spritzhandstücke unerlässlich ist.

Üblicherweise sind Spritzhandstücke der oben beschriebenen Art über einen Versorgungsschlauch bspw. mit einer sog. Dentaleinheit verbunden, welche die von dem Handstück abgegebenen Medien, also die Luft in Form von Druckluft und das Wasser zur Verfügung stellt. Mittels entsprechender Drucktaster am Handstück kann dann der Benutzer auswählen, welches Medium durch das Handstück abgegeben wird.

Der eigentliche Austritt der Medien erfolgt am vorderen Endbereich einer Kanüle, die am vorderen Ende des Handstücks angeordnet ist. In der Regel ist die Kanüle derart mit dem eigentlichen Handstück auswechselbar gekoppelt, dass sie gegenüber diesem zumindest innerhalb eines gewissen Winkelbereichs um eine Drehachse verdreht werden kann. Im Kopplungsbereich erfolgt dann eine Übergabe der Medien von dem Handstück auf innerhalb der Kanüle verlaufende Leitungen. Diese führen zum vorderen Endbereich der Kanüle, wobei hier in der Regel eine düsenartige Verjüngung des Leitungsquerschnitts vorgesehen ist, durch die ein Austritt der Medien mit hoher Geschwindigkeit gewährleistet ist. Hierdurch wird die Reinigungswirkung der durch das Spritzhandstück abgegebenen Luft oder des Wassers verbessert.

Aus hygienischen Gründen ist es erforderlich, die Kanüle nach deren Verwendung zu reinigen und zu sterilisieren. Das Erfordernis einer derartigen sog. Wiederaufbereitung beschränkt sich hierbei nur dann auf die Kanüle, wenn aufgrund ihrer Länge gewährleistet ist, dass das eigentliche Spritzhandstück einen ausreichenden Abstand zum vorderen Endbereich der Kanüle aufweist und somit sichergestellt ist, dass das Handstück nicht in Kontakt mit dem Patienten gelangt. Entsprechende Normen sehen hierzu vor, dass die Kanüle eine Längserstreckung von mindestens 80mm aufweisen sollte.

Aus dem Stand der Technik sind unterschiedliche Vorgehensweisen zum Realisieren derartiger Kanülen bekannt. Oftmals handelt es sich hierbei um wiederverwendbare Komponenten, die einen länglichen, sich konisch verjüngenden hülsenartigen Grundkörper aufweisen, der an seinem rückseitigen Ende einen Kopplungsbereich zur Verbindung mit einem dentalen Handstück aufweist und am vorderen Ende mit düsenartigen Medienaustritten versehen ist. Innerhalb dieser Hülse erstrecken sich dann die Medienleitungen in Form von Schläuchen oder Rohren, wobei durch den Hohlraum der Hülse ggf. auch entsprechende Lichtleiter verlaufen können, über die der zu behandelnde Bereich beleuchtet wird. Eine derartige Kanüle ist bspw. aus der EP 2 124 812 B1 bekannt.

In den Schriften WO 86/04247 A1 und US 4519385 A werden chirurgische Handstücke beschrieben, welche dazu ausgelegt sind für chirurgische Spül- und Absauganwendungen genutzt zu werden. Die hierbei offenbarten Handstücke weisen Medienleitungen auf, welche zumindest teilweise durch flexible Kanäle gebildet werden, welche jeweils durch einen Triggermechanismus verschlossen werden können. Zudem weisen die Handstücke jeweils einen Bereich zur Medienabgabe sowie zum Absaugen von Flüssigkeit auf. Allerdings sind diese Aufsätze nicht zur Verwendung mit dentalen Spritzhandstücken vorgesehen und eignen sich auch nicht für die Abgabe mehrerer Medien.

**In** den oben beschriebenen dentalmedizinischen Fällen handelt es sich bei den Kanülen um verhältnismäßig komplexe Bauteile, die mit einem relativ hohen Aufwand hergestellt und montiert werden müssen. Ein weiterer Nachteil ergibt sich daraus, dass durch den hülsenartigen Außenmantel ein Hohlraum gebildet ist, durch den zwar die Leitungen und ggf. ein Lichtleiter geschützt verlaufen, andererseits auch weitere ungenutzte Hohlräume gebildet werden, die im Rahmen der Wiederaufbereitung nur schwer gereinigt und/oder sterilisiert werden können.

Dementsprechend gibt es auch alternative Ansätze, derartige Kanülen als kostengünstige Kunststoffbauteile zu realisieren, die dann ggf. als Wegwerfprodukte einmalig verwendet werden können. Zwei Lösungen hierzu sind bspw. in der US 9,814,551 und der DE 691 06 138 T2 gezeigt, wobei es sich hierbei jeweils um Kunststoff-Spritzgussteile handelt, die einfach und kostengünstig hergestellt werden können. Allerdings weisen diese bekannten Einwegkanülen das Problem auf, dass sie aufgrund herstellungstechnischer Schwierigkeiten nur mit geradlinig verlaufenden Medienleitungen realisiert werden können. Bevorzugt wäre allerdings, dass die Kanüle in ihrem vorderen Endbereich abgewinkelt ausgeführt ist, da hierdurch die Sichtbarkeit während der Benutzung des Spritzhandstücks verbessert wird. Weiterhin können die aus dem Stand der Technik bekannten Einwegkanülen nur mit einer verhältnismäßig geringen Länge hergestellt werden, sodass die oben erwähnte Mindestlänge von 80mm nur schwer realisiert werden kann. Schließlich erlaubt die Herstellung dieser Kanülen im Spritzgussverfahren auch nur bedingt, die vorderen Endbereiche der Medienleitungen düsenartig auszugestalten, um eine Abgabe der Medien mit hoher Geschwindigkeit zu ermöglichen. Diese bekannten Einwegkanülen sind dementsprechend zwar kostengünstig herstellbar, gleichzeitig allerdings auch mit zahlreichen Nachteilen verbunden.

Eine Verbesserung gegenüber diesen bekannten Lösungen ist in der US 2020/0290066 A1 dargestellt. Hier wird eine Kanüle gezeigt, die zur lösbaren Ankopplung an das vordere Ende eines zahnärztlichen Spritzhandstücks gedacht ist, wobei mit Hilfe der Kanüle unter Druck stehende Fluide wie Luft oder Wasser weitergeleitet werden. Die Kanüle wird durch zwei Kunststoffkörper gebildet, welche entsprechende flache Anlageflächen aufweisen, an denen die beiden Kunststoffkörper miteinander verschweißt werden, wobei im Rahmen dieser Herstellung sich entlang der Kanüle erstreckende Medienkanäle gebildet werden. Diese Vorgehensweise vergrößert im Vergleich zur Herstellung entsprechend der US 9,814,551 oder der DE 691 06 138 T2 die Möglichkeiten zur Gestaltung der Medienkanäle.

Der vorliegenden Erfindung liegt die Aufgabenstellung zugrunde, ein weiter verbesserte Möglichkeit anzugeben, derartige Kanülen zur Abgabe von fluiden Medien in einfacher und kostengünstiger Weise herstellen zu können, wobei trotz allem die aus dem Stand der Technik bekannten und dort bestehenden Probleme und Nachteile vermieden werden.

Die Erfindung wird durch eine dentalmedizinische Kanüle zur Abgabe von Medien mit den Merkmalen des Anspruchs 1 sowie durch ein Verfahren zum Herstellen einer Kanüle mit den Merkmalen des Anspruchs 13 gelöst. Vorteilhafte Weiterbildungen der Erfindung sind Gegenstand der abhängigen Ansprüche.

Die erfindungsgemäße Lösung beruht wiederum auf dem Gedanken, die Kanüle in Form eines kostengünstig herstellbaren Kunststoffkörpers zu bilden, wobei analog zur Vorgehensweise der US 2020/0290066 A1 die Medienleitungen zumindest abschnittsweise durch Kanäle gebildet werden, die sich durch den Kunststoffkörper erstrecken. Im Gegensatz zu den Einwegkanülen der US 9,814,551 oder der DE 691 06 138 T2 ist also zunächst vorgesehen, dass der Kunststoffkörper nicht als einstückiges Spritzgussbauteil vorliegt, sondern aus zwei jeweils einstückigen Kunststoffteilkörpern besteht, die entlang einer Verbindungsebene, in der die Kanäle verlaufen, abgedichtet miteinander verbunden sind.

Dabei ist ferner vorgesehen, dass zwei Medienleitungen im vorderen Endbereich der Kanüle in einer sog. Mischkammer zusammengeführt sind und in eine gemeinsame Austrittsöffnung münden, wobei im Bereich der Mischkammer eine Düse zum Vermischen der durch die beiden Medienleitungen übermittelten Medien vorgesehen ist und wobei diese Düse durch ein separates Einlegeteil gebildet ist.

Gemäß der vorliegenden Erfindung wird also eine dentalmedizinische Kanüle zur Abgabe von fluiden Medien wie z.B. Luft und/oder Wasser vorgeschlagen, wobei die Kanüle als Aufsatz für eine Dentalspritze zu verstehen ist und aufweist:
- einen rückseitigen Kopplungsbereich, der zur Kopplung mit einem medizinischen Handstück, welches die Medien zur Verfügung stellt, ausgebildet ist,
- einen vorderen Endbereich mit mindestens einer Austrittsöffnung zur Abgabe der Medien, sowie
- zumindest zwei sich von dem Kopplungsbereich zu dem vorderen Endbereich erstreckende, längliche Medienleitungen, welche zum Führen der Medien von dem rückseitigen Kopplungsbereich zur Austrittsöffnung am vorderen Endbereich der Kanüle dienen.

Erfindungsgemäß ist hierbei vorgesehen, dass die Medienleitungen zumindest abschnittsweise durch Kanäle in einem Kunststoffkörper gebildet sind, der aus zwei jeweils einstückigen Kunststoffteilkörpern besteht, die entlang einer Verbindungsebene, in der die Kanäle verlaufen, abgedichtet miteinander verbunden sind, und dass die zwei Medienleitungen im vorderen Endbereich der Kanüle in einer Mischkammer zusammengeführt sind und in eine gemeinsame Austrittsöffnung münden, wobei im Bereich der Mischkammer eine Düse zum Vermischen der durch die beiden Medienleitungen übermittelten Medien angeordnet ist, welche durch ein separates Einlegeteil gebildet ist.

Gemäß der vorliegenden Erfindung wird auch ein Verfahren zum Herstellen einer dentalmedizinischen Kanüle zur Abgabe von fluiden Medien wie z.B. Luft und/oder Wasser vorgeschlagen, wobei die Kanüle als Aufsatzstück für eine Dentalspritze zu verstehen ist und aufweist:
- einen rückseitigen Kopplungsbereich, der zur Kopplung mit einem medizinischen Handstück, welches die Medien zur Verfügung stellt, ausgebildet ist,
- einen vorderen Endbereich mit mindestens einer Austrittsöffnung zur Abgabe der Medien, sowie
- zumindest zwei sich von dem Kopplungsbereich zu dem vorderen Endbereich erstreckende, längliche Medienleitungen, welche zum Führen der Medien von dem rückseitigen Kopplungsbereich zur Austrittsöffnung am vorderen Endbereich der Kanüle dienen.

Das Herstellungsverfahren besteht dabei darin, dass in einem ersten Schritt zwei jeweils einstückige Kunststoffteilkörper hergestellt werden, die dann in einem darauffolgenden Herstellungsschritt entlang einer Verbindungsebene abgedichtet miteinander verbunden werden, wobei im zusammengefügten Zustand entlang der Verbindungsebene in dem resultierenden Kunststoffkörper Kanäle verlaufen, welche die Medienleitungen bilden. Die zwei Medienleitungen sind hierbei im vorderen Endbereich der Kanüle in einer Mischkammer zusammengeführt und münden in eine gemeinsame Austrittsöffnung, wobei im Bereich der Mischkammer eine Düse zum Vermischen der durch die beiden Medienleitungen übermittelten Medien angeordnet ist, welche durch ein separates Einlegeteil gebildet ist.

Dadurch, dass die Kanüle nicht als einstückiger Kunststoff-Spritzgußkörper, sondern in der erfindungsgemäßen Weise hergestellt wird, können zahlreiche Vorteile erhalten werden. Diese ergeben sich insbesondere daraus, dass die die Kanäle letztendlich bildenden Nuten bzw. Vertiefungen der Kunststoffteilkörper vor deren Verbindung frei zugänglich sind. Werden also die Kunststoffteilkörper bspw. wiederum im Spritzgussverfahren hergestellt, so ergeben sich im Vergleich zu den Lösungen im Stand der Technik keinerlei Probleme beim sog. Entformen dieser Kunststoffteilkörper, was letztendlich die Möglichkeit eröffnet, die die Leitungen bildenden Kanäle mit einer großen Freiheit und gleichzeitig hohen Präzision zu gestalten. Dies bedeutet nicht nur, dass die letztendlich gebildete Kanüle problemlos die oben angesprochene Mindestlänge von 80mm aufweisen kann, sondern führt auch zu dem Vorteil, dass eine abgewinkelte Ausführungsform der Kanäle ohne Weiteres realisiert werden kann. Auch eine zur optimierten Abgabe der Medien erforderliche Verjüngung der Kanäle im vorderen Endbereich der Kanüle kann auf diesem Wege problemlos realisiert werden, sodass zwar der Aufwand bei der Herstellung im Vergleich zu den Einwegkanülen des Standes der Technik geringfügig erhöht ist, gleichzeitig allerdings zahlreiche Vorteile erhalten werden.

Die beiden Kunststoffteilkörper bilden vorzugsweise jeweils Halbschalen, insbesondere zwei bzgl. der Verbindungsebene symmetrisch ausgebildete Halbschalen.

Dabei ist wie bereits erwähnt besonders bevorzugt vorgesehen, die zwei Kunststoffteilkörper durch Spritzgusselemente zu bilden, was eine besonders einfache Herstellungsweise darstellt.

Die abgedichtete Verbindung der beiden Kunststoffteilkörper wird vorzugsweise dadurch erzielt, dass diese stoffschlüssig miteinander verbunden werden. Eine erste Möglichkeit würde bspw. darin bestehen, die beiden Kunststoffteilkörper miteinander zu verkleben. Besonders bevorzugt werden diese allerdings miteinander verschweißt, wobei insbesondere das Laserschweißen verwendet werden kann. Ebenso könnte jedoch auch eine andere Schweißmethode wie das sog. Ultraschallschweißen verwendet werden.

Gemäß einer bevorzugten Ausführungsform ist ferner vorgesehen, dass zumindest eine der Medienleitungen im vorderen Endbereich der Kanüle sich verjüngend ausgeführt ist. Wie erläutert kann dies bei der erfindungsgemäßen Vorgehensweise zum Realisieren der Kanüle ohne größere Probleme realisiert werden. Eine sich verjüngende Ausgestaltung der Medienleitungen führt dann dazu, dass in Form einer Düse eine beschleunigte Abgabe der Medien erfolgt, was zu einer besseren Reinigungswirkung bei der Nutzung des Spritzhandstücks führt.

Eine Verbesserung hinsichtlich der Handhabung und Sichtbarkeit des zu behandelnden Bereichs wird dabei vorzugsweise dadurch erreicht, dass die Kanüle in einem vorderen Abschnitt abgewinkelt ausgeführt ist.

Die zumindest zwei sich entlang der Kanüle erstreckenden Medienleitungen sind vorzugsweise zur Abgabe einerseits von Luft und andererseits von Wasser vorgesehen. Dabei kann gemäß einer besonders bevorzugten Ausführungsform allerdings auch vorgesehen sein, dass sich eine dritte Medienleitung entlang der Kanüle erstreckt. Auch diese dritte Medienleitung ist hierbei zur Übermittlung von Luft vorgesehen, wobei dann eine der beiden Luft-Medienleitungen dazu dient, im Bedarfsfall gemeinsam mit der Medienleitung für Wasser ein sog. Spray auszugeben. Die zusätzliche getrennte Medienleitung für Luft ist dann ausschließlich für eine Abgabe von Luft vorgesehen, was den Vorteil mit sich bringt, dass im Bedarfsfall sofort reine Luft ohne etwaige Wasserrückstände abgegeben werden kann.

Erfindungsgemäß ist wie bereits erwähnt vorgesehen, dass zwei Medienleitungen im vorderen Endbereich der Kanüle in einer sog. Mischkammer zusammengeführt sind und in eine gemeinsame Austrittsöffnung münden. Dies kann insbesondere für diejenigen Medienleitungen vorgesehen sein, die Luft und Wasser gemischt in Form eines Sprays abgeben sollen.

Eine weitere bevorzugte Ausführungsform der erfindungsgemäßen Kanüle besteht darin, dass diese einen Lichtleiter aufweist, der sich ausgehend von dem Kopplungsbereich zu einem vorderen Bereich der Kanüle zur Lichtabgabe erstreckt, wobei der Lichtleiter dann vorzugsweise durch ein separates Bauteil gebildet ist, welches in einen weiteren Kanal des Kunststoffteils eingelegt ist. Auch dies ist herstellungstechnisch sehr einfach zu realisieren, da im Rahmen der Herstellung der Kunststoffteilkörper lediglich Maßnahmen zur Realisierung eines weiteren Kanals getroffen werden müssen, wobei dann der Lichtleiter in diesen Kanal eingelegt und im Rahmen des Verbindens der beiden Kunststoffteilkörper miteinander innerhalb der Kanüle fixiert wird. Hierbei kann vorgesehen sein, dass ein zur Lichtabgabe vorgesehenes Ende des Lichtleiters im Bereich der zumindest eine Austrittsöffnung zur Abgabe der Medien angeordnet ist. Alternativ hierzu kann allerdings das zur Lichtabgabe vorgesehene Ende des Lichtleiters auch an einem Außenumfangsbereich des Kunststoffkörpers angeordnet und derart ausgerichtet sein, dass Licht auf eine Stelle gerichtet wird, die vor der zumindest einen Austrittsöffnung angeordnet ist.

Der zur Kopplung mit dem Handstück vorgesehene Kopplungsbereich weist vorzugsweise einen im Wesentlichen hohlzylinderartigen Aufnahmebereich zur Aufnahme eines Kopplungszapfens des Handstücks auf, wobei besonders bevorzugt an der Innenwand des Aufnahmebereichs ringartige Kanäle ausgebildet sind, die jeweils in Fluidverbindung mit einem eine Medienleitung bildenden Kanal sind. Diese Ausgestaltung des Kopplungsbereichs ermöglicht es, dass die Kanüle im Vergleich zum Handstück um eine Drehachse rotiert bzw. zumindest teilweise verdreht werden kann, was letztendlich die Handhabung des Spritzhandstücks erleichtert.

Dabei kann gemäß einer ersten, besonders bevorzugten Variante vorgesehen sein, dass der Kopplungsbereich durch die beiden miteinander verbundenen Kunststoffteilkörper gebildet wird und somit Bestandteil des Kunststoffkörpers ist. Abgesehen von dem ggf. vorgesehenen Einlegeteil für die Düse und/oder dem eingelegten Lichtleiter besteht also die erfindungsgemäße Kanüle in diesem Fall ausschließlich aus den beiden miteinander verbundenen Kunststoffteilkörpern. Alternativ hierzu wäre es allerdings auch denkbar, dass die beiden miteinander verbundenen Kunststoffteilkörper an ihrer Rückseite einen etwa hohlzylinderartigen Bereich bilden, in dem ein den Aufnahmebereich zur Aufnahme des Kopplungszapfens bildendes Einlegeteil angeordnet ist. Es kann sich hierbei um eine entsprechend gestaltete, aus Metall gebildete Hülse handeln, die dann für die eigentliche Medienübergabe verantwortlich ist. Schließlich wäre es auch denkbar, den Kopplungsbereich durch ein separates Bauteil zu bilden, welches dann an der Rückseite des die Medienleitungen bildenden Kunststoffkörpers angeordnet und mit diesem verbunden ist.

Nachfolgend soll die Erfindung anhand der beiliegenden Zeichnung näher erläutert werden. Es zeigen:
Figuren 1a bis 1d Ansichten eines nicht unter den Schutzumfang der Ansprüche fallenden ersten Beispiels einer Kanüle zur Verdeutlichung der Herstellungsweise;
Figuren 2a bis 2e Ansichten eines ersten Ausführungsbeispiels einer erfindungsgemäßen Kanüle;
Figuren 3a bis 3e Ansichten eines zweiten Ausführungsbeispiels einer erfindungsgemäßen Kanüle;
Figuren 4a bis 4e Ansichten eines dritten Ausführungsbeispiels einer erfindungsgemäßen Kanüle;
Figuren 5a bis 5d Ansichten eines nicht unter den Schutzumfang der Ansprüche fallenden zweiten Beispiels einer Kanüle;
Figuren 6a bis 6d Ansichten eines nicht unter den Schutzumfang der Ansprüche fallenden dritten Beispiels einer Kanüle.

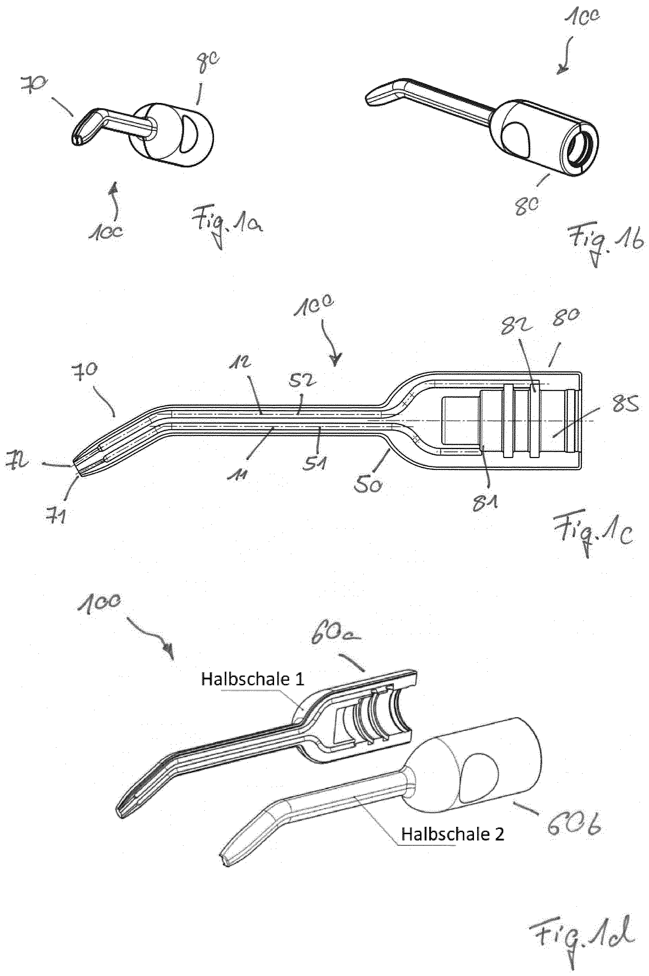

Anhand der Figuren 1a - 1d soll zunächst ein erstes Beispiel einer Kanüle detailliert erläutert werden. Die in den weiteren Figuren gezeigten Varianten unterscheiden sich dann in erster Linie im Hinblick auf die Anzahl der entlang der Kanüle verlaufenden Medienleitungen sowie der Gestaltung der Bereiche zur Abgabe der Medien und zur Kopplung mit einem medizinischen Handstück.

Die grundsätzliche Gestaltung der in den Figuren mit dem Bezugszeichen 100 versehenen Kanüle ist den Figuren 1a und 1b entnehmbar, welche zwei perspektivische Ansichten der Kanüle 100 zeigen. Figur 1c zeigt dann einen Schnitt durch die Kanüle 100 entlang der Verbindungsebene, während Figur 1d die beiden Kunststoffteilkörper vor deren Zusammenfügen zu der Kanüle 100 zeigt.

Wie bereits erläutert, ist die Kanüle 100 zur Kopplung mit einem in den Figuren nicht dargestellten zahnmedizinischen Handstück vorgesehen, welches die Medien zur Verfügung stellt, welche mit Hilfe der Kanüle 100 abgegeben werden sollen. In der Regel handelt es sich bei diesen Medien um Luft und Wasser, die ggf. auch gemeinsam in Form eines Sprays abgegeben werden können. Grundsätzlich könnte die erfindungsgemäße Kanüle 100 allerdings auch zur Abgabe anderer flüssiger oder gasförmiger Medien bzw. generell zur Abgabe fluider Medien genutzt werden.

Den rückseitigen Bereich der Kanüle 100 bildet ein Kopplungsbereich 80, der zum Anschluss an ein zahnmedizinisches Handstück ausgebildet ist. Dieser Kopplungsbereich 80 weist im Vergleich zum vorderen Teil der Kanüle 100 eine größere Breite bzw. Dicke auf und dient gleichzeitig auch als Griffbereich für die Kanüle 100, weshalb am Außenumfang des Kopplungsbereichs 80 zwei einander gegenüberliegende Einwölbungen 89 (s. Fig. 1b) vorgesehen sind, durch die ein Greifen der Kanüle 100 erleichtert wird.

Von diesem Kopplungsbereich 80, dessen Ausgestaltung nachfolgend noch näher beschrieben wird, erstreckt sich zur Vorderseite hin ein rohrartiger, im vorderen Drittel abgewinkelt ausgeführter Bereich, der in den vorderen Endbereich 70 zur Abgabe der Medien mündet. Bei der in den Figuren 1a - 1d dargestellten Variante ist die Abgabe von Luft und Wasser über zwei getrennte Leitungen 11, 12 vorgesehen, weshalb der vordere Endbereich 70 in diesem Fall zwei separate Austrittsöffnungen 71 und 72 jeweils für eines der beiden Medien aufweist. Beide Austrittsöffnungen 71 und 72 können hierbei parallel zueinander ausgerichtet oder derart gestaltet und ausgerichtet sein, dass sich die abgegebenen Medien in einem bestimmten Abstand vor der Kanüle 100 treffen bzw. überkreuzen, so dass bei gleichzeitiger Abgabe von Luft und Wasser hier ein Spray entsteht. Wie allerdings die weiteren Varianten zeigen, kann die Abgabe eines Sprays auch anderweitig realisiert werden.

Hauptfunktion des Kopplungsbereich 80 ist es, die von dem Handstück bereitgestellten Medien zu übernehmen. Das Handstück weist hierfür einen entsprechend gestalteten, etwa zylinderartigen Kopplungszapfen auf, der in einen hohlzylinderartigen Aufnahmebereich 85 des Kopplungsbereichs 80 eintaucht und hier abhängig von einer Betätigung des Handstücks durch den Benutzer Luft und/oder Wasser abgibt. An der Innenwand des Aufnahmebereichs 85 der Kanüle 100 sind dementsprechend ringartig umlaufende Kanäle 81 und 82 vorgesehen, die mit Abgabeöffnungen des Kopplungszapfens zusammenwirken und aufgrund ihrer Ringform ein Verdrehen der Kanüle 100 um eine in Figur 1c angedeutete Achse I ermöglichen. Insbesondere ist gewährleistet, dass in jeder Drehstellung der Kanüle 100 eine Übergabe der Medien erfolgen kann. Während ein hinterer Ringkanal 82 hierbei in etwa auf halber Höhe des zylinderartigen Aufnahmebereichs 85 durch eine umlaufende Nut ausgebildet ist, wird ein vorderer Ringkanal 81 durch die entsprechend abgestufte Ausgestaltung des Aufnahmebereichs 85 gebildet.

Diese ringartigen Kanäle 81 und 82 sind dann mit sich in Längsrichtung der Kanüle 100 erstreckenden Medienleitungen 11 und 12 verbunden, die zu den Austrittsöffnungen 71 und 72 führen. Dabei kann insbesondere vorgesehen sein, dass die Medienleitungen 11 und 12 im vorderen Endbereich 70 in der Nähe der Austrittsöffnungen 71 und 72 einen reduzierten Querschnitt aufweisen oder sich kontinuierlich verjüngend ausgebildet sind. Beide Maßnahmen haben zur Folge, dass die Austrittsgeschwindigkeit des entsprechenden Mediums zusätzlich erhöht wird und hierdurch eine bessere Reinigungswirkung erhalten wird.

Die erfindungsgemäße Lösung besteht nunmehr u.a. in der Frage, in welcher Weise die Kanüle 100 mit den sich darin erstreckenden Medienleitungen 11 und 12 realisiert wird. Hierbei ist erfindungsgemäß vorgesehen, dass die Kanüle 100 durch einen Kunststoffkörper 50 gebildet wird, in dem sich den Leitungen 11 und 12 entsprechende Kanäle 51 und 52 erstrecken. Im Gegensatz zu dem eingangs diskutierten Stand der Technik werden also die Leitungen 11 und 12 nicht durch separat in einem Hohlraum zu verlegende Schläuche oder Röhren gebildet, sondern durch Längskanäle in einem Kunststoffkörper 50. Diese Maßnahme hat u.a. zur Folge, dass abgesehen von den Medienleitungen 11 und 12 sowie dem Aufnahmebereich 85 des Kopplungsbereichs 80 die Kanüle 100 keine weiteren Hohlräume oder dergleichen aufweist, in der sich Flüssigkeiten und/oder Bakterien ansammeln könnten. Insbesondere für den Fall, dass eine Wiederverwendung der Kanüle 100 und dementsprechend eine Reinigung vorgesehen ist, führt dies zu einem großen Vorteil, da keine nur schwer zugänglichen und damit schwer zu reinigenden Hohlräume existieren.

Die Realisierung der die Medienleitungen 11 und 12 bildenden Kanäle 51 und 52 in der dargestellten Form - abgewinkelt, sich verjüngend, in geeigneter Länge usw. - ist allerdings nur im Rahmen einer besonderen, erfindungsgemäßen Maßnahme möglich, die nachfolgend näher erläutert werden soll.

So besteht aufgrund der Ausgestaltung und des Verlaufs der Kanäle 51 und 52 nicht die Möglichkeit, die Kanüle 100 in Form eines einstückigen Spritzgussteils zu realisieren. Stattdessen ist gemäß der vorliegenden Erfindung vorgesehen, zunächst zwei in Figur 1d dargestellte Kunststoffteilkörper 60a und 60b zu bilden, die in einem anschließenden Arbeitsschritt dichtend miteinander verbunden werden.

Die Ausgestaltung der Kunststoffteilkörper 60a und 60b ist dabei entsprechend den Darstellungen der Figuren 1c und 1d derart, dass es sich um zwei idealerweise symmetrisch zueinander ausgebildete Halbschalen handelt, die also jeweils zur Hälfte den Aufnahmebereich 85 mit den umlaufenden Kanälen 81 und 82 sowie insbesondere auch die sich von dem Aufnahmebereich 85 zur Vorderseite hin erstreckenden Kanäle 51 und 52 bilden. D.h., jeder Kunststoffteilkörper 60a und 60b weist eine zur Verbindungsebene hin offene Teilnut - beispielsweise mit einem halbkreisförmigen Querschnitt - auf, die mit einer entsprechenden Teilnut des anderen Kunststoffteilkörpers 60a, 60b korrespondiert und im zusammengesetzten Zustand beider Kunststoffteilkörper 60a und 60b dann den eigentlichen, im Querschnitt vorzugsweise kreisförmigen Kanal 51 bzw. 52 bildet.

Hinsichtlich der Kanäle 51 und 52 wäre grundsätzlich auch denkbar, einen der Kunststoffteilkörper im Verbindungsbereich plan auszugestalten und die entsprechende Nut ausschließlich im zweiten Kunststoffteilkörper vorzusehen. Eine symmetrische Ausgestaltung der Kunststoffteilkörper 60a und 60b, bei der beide Kunststoffteilkörper 60a, 60b jeweils gemeinsam dann die Kanäle 51, 52 sowie die weiteren Bestandteile der Kanüle 100 bilden, ist allerdings bevorzugt.

Wesentlich ist, dass beide Kunststoffteilkörper 60a und 60b beim Zusammenfügen zu dem Kunststoffkörper 50 tatsächlich dicht miteinander verbunden werden, sodass die hierbei entstehenden Kanäle 51 und 52 tatsächlich dann störungsfrei die Medien vom Kopplungsbereich 80 zum vorderen Endbereich 70 übertragen der Kanüle 100 können. Hierbei ist bevorzugt eine stoffschlüssige Verbindung zwischen beiden Kunststoffteilkörpern 60a und 60b vorgesehen, wobei eine erste Variante in einem entsprechenden Verkleben beider Kunststoffteilkörper 60a und 60b miteinander bestehen könnte. Besonders bevorzugt werden allerdings beide Kunststoffteilkörper 60a und 60b miteinander verschweißt, wobei insbesondere ein Laserschweißverfahren herangezogen wird. Letztendlich werden durch die beschriebenen Maßnahmen beide Kunststoffteilkörper 60a und 60b untrennbar miteinander verbunden, um dann die in den Figuren dargestellte Kanüle 100 zu bilden.

Die beschriebene Vorgehensweise führt zu zahlreichen Vorteilen gegenüber den aus dem Stand der Technik bekannten Lösungen, insbesondere auch gegenüber den Einwegkanülen, die in Form einstückiger Kunststoffkörper realisiert sind. So erlaubt die vorgeschlagene Maßnahme im Gegensatz zum Stand der Technik die Realisierung der dargestellten abgewinkelten, also nicht-geradlinigen Ausgestaltung der Kanüle 100. Auch die sich verjüngende Ausgestaltung der Medienleitungen 11 und 12 im vorderen Endbereich ist mit Hilfe der erfindungsgemäßen Maßnahmen in besonders einfacher Weise zu realisieren. Schließlich bestehen bei der vorgeschlagenen Vorgehensweise zum Herstellen der Kanüle 100 auch keine Beschränkungen hinsichtlich der Abmessungen der Kanüle 100. Dies bedeutet, dass die Distanz vom rückseitigen Kopplungsbereich 80 bis zum vorderen Endbereich 70 mit den Abgabeöffnungen 71 und 72 in jedem Fall derart gewählt werden kann, dass die hinsichtlich der Hygienevorschriften vorgesehenen Abmessungen erzielt werden können. Insbesondere bedeutet dies, dass die Kanüle 100 eine Länge aufweisen kann, welche die oben angesprochenen 80mm erreicht oder überschreitet.

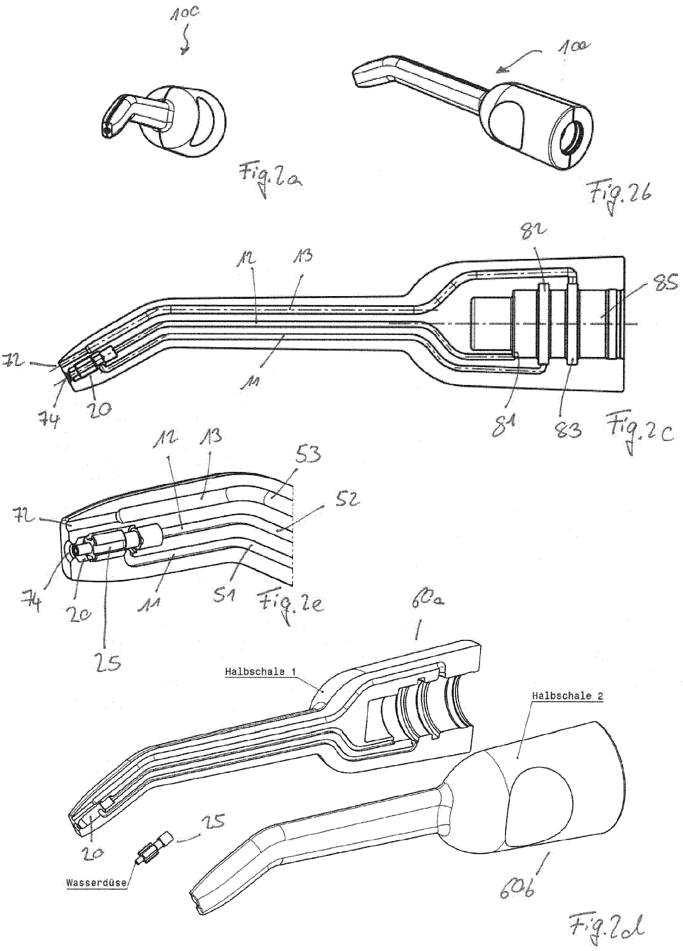

Anhang der Figuren 2 - 6 sollen nunmehr Varianten der erfindungsgemäßen Kanüle erläutert werden. Diese beruhen auf dem gleichen Grundprinzip, wie es anhand der Figuren 1a bis 1d erläutert wurde. In allen Fällen werden also die Medienleitungen zumindest abschnittsweise durch Kanäle in einem Kunststoffkörper gebildet, der dadurch gebildet wird, dass zwei jeweils einstückige Kunststoffteilkörper dichtend miteinander verbunden werden. Gleiche Komponenten der im Folgenden besprochenen Kanülen sind dementsprechend auch mit gleichen Bezugszeichen versehen.

Bei dem in den Figuren 2a - 2e dargestellten Ausführungsbeispiel ist im Vergleich zum Beispiel der Figuren 1a - 1d eine dritte Medienleitung 13 vorgesehen, die sich wiederum von dem Kopplungsbereich 80 zum vorderen Ende der Kanüle erstreckt. An der Innenwand des Aufnahmebereichs 85 ist für die dritte Medienleitung 13 ein entsprechender weiterer ringförmiger Kanal 83 ausgebildet, der mit einem zusätzlichen sich in Längsrichtung erstreckenden dritten Kanal 53 in Verbindung steht. Alle Kanäle 51, 52, 53 verlaufen hierbei wie bereits erwähnt in der Verbindungsebene der beiden Kunststoffteilkörper 60a, 60b und somit parallel zueinander.

Während bei der Kanüle der Figuren 1a - 1d die beiden Abgabeöffnungen 71 und 72 jeweils mit einer der beiden Medienleitungen 11 und 12 in Verbindung standen, ist bei der erfindungsgemäßen Ausführungsform vorgesehen, dass zwei Medienleitungen 11 und 12 noch vor der eigentlichen Austrittsöffnung 74 zusammengeführt sind. Genau genommen münden beide entsprechenden Kanäle 51 und 52 in eine kleine, etwa zylinderartige Mischkammer 20, in der die zugeführten Medien vor ihrer eigentlichen Abgabe miteinander vermischt werden. Dementsprechend ist hier vorzugsweise vorgesehen, über eine der beiden Medienleitungen 11 z.B. Luft und über die andere Medienleitung 12 Wasser zu führen, wobei dann Luft und Wasser in der Mischkammer 20 miteinander vermischt und in Form eines Sprays über die Öffnung 74 abgegeben werden. Das Mischen von Luft und Wasser wird hierbei durch ein eine Düse bildendes Zusatzteil 25 optimiert, welches als Einlegeteil in die Kammer 20 eingelegt und dort im Rahmen des Zusammenfügens der beiden Kunststoffteilkörper 60a und 60b fixiert wird. Durch am Außenumfang dieses Einlegeteils 25 ausgebildete Nuten wird eine bessere Verteilung eines der beiden Medien erzielt, sodass dieses anschließend gleichmäßiger mit dem zweiten Medium zu dem über die Öffnung 74 abgegebenen Spray vermischt werden kann.

Die zusätzliche dritte Medienleitung 13 mit der zugehörigen Austrittsöffnung 72 kann wiederum zur Weiterleitung von Luft genutzt werden. Während also über die Austrittsöffnung 74 das Luft-Wasser-Gemisch in Form eines Sprays abgegeben wird, wird über die Öffnung 72 reine Luft abgegeben. Die Nutzung einer separaten, ausschließlich zur Luftabgabe genutzten Leitung 13 bringt hierbei den Vorteil mit sich, dass bei Aktivierung der Abgabe von Luft diese nicht zunächst noch geringe Flüssigkeitsrestanteile enthält, sondern stattdessen unmittelbar trockene Luft zum Wegblasen von Partikeln oder anderen Verunreinigungen zur Verfügung steht.

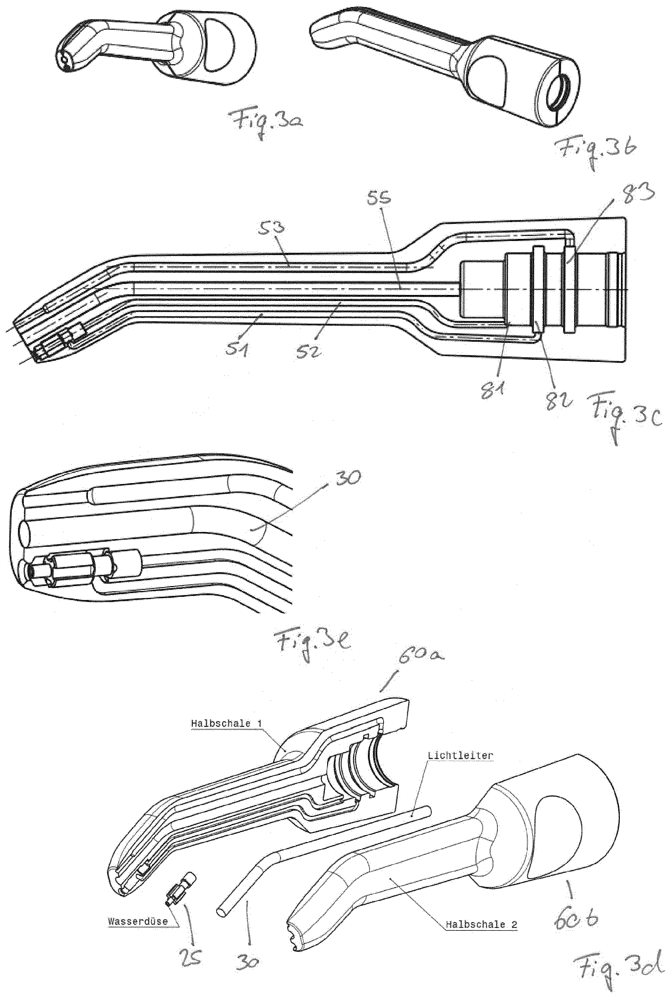

Die in den Figuren 3a - 3e dargestellte erfindungsgemäße Variante der Kanüle 100 entspricht hinsichtlich der Übergabe und Weiterleitung der Medien der in den Figuren 2a - 2e gezeigten Variante. Auch in diesem Fall sind drei Medienleitungen 11 - 13 vorgesehen, über die wahlweise reine Luft oder Spray an der Vorderseite der Kanüle 100 abgegeben werden kann.

Zusätzlich ist bei dieser dritten Ausführungsform vorgesehen, dass sich parallel zu den Leitungen 11 - 13 ein Lichtleiter 30 erstreckt, der wiederum vom rückseitigen Kopplungsbereich 80 zum vorderen Endbereich 70 der Kanüle 100 führt. Ein am vorderen Ende des nicht dargestellten Kopplungszapfens des Handstücks zur Verfügung gestelltes Licht wird dann rückseitig in den Lichtleiter 30 eingekoppelt und am vorderen Endbereich der Kanüle 100 ebenso wie die weiteren Medien abgegeben. Die Ausrichtung des zur Lichtabgabe vorgesehenen vorderen Endes 31 des Lichtleiters 30 ist hierbei derart, dass er parallel zu der Ausrichtung der Abgabeöffnungen 72, 74 ausgerichtet ist, sodass das von dem Lichtleiter 30 abgegebene Licht auf den gleichen Bereich wie auch die weiteren Medien gerichtet wird.

Vorzugsweise wird der Lichtleiter 30 durch ein separates Bauteil gebildet, welches in einem entsprechenden Längskanal 55 des Kunststoffkörpers 50 eingelegt wird. Analog zu den Medienleitungen 11 - 13 sind also die Kunststoffteilkörper 60a und 60b derart beschaffen, dass sie zusätzlich einander zugewandte korrespondierende Teilnuten aufweisen, die im zusammengefügten Zustand beider Kunststoffteilkörper 60a, 60b einen länglichen, abgewinkelten Kanal bilden, in dem der Lichtleiter 30 verlegt ist. Der Lichtleiter 30 wird hierbei ebenso wie das die Düse bildende Einlegeteil 25 in einen der beiden Kunststoffteilkörper 60a oder 60b eingelegt, bevor dieser mit dem anderen Kunststoffteilkörper 60a, 60b stoffschlüssig verbunden wird. Diese Maßnahme sorgt gleichzeitig auch für eine sichere Fixierung des Lichtleiters 30 in der Kanüle 100.

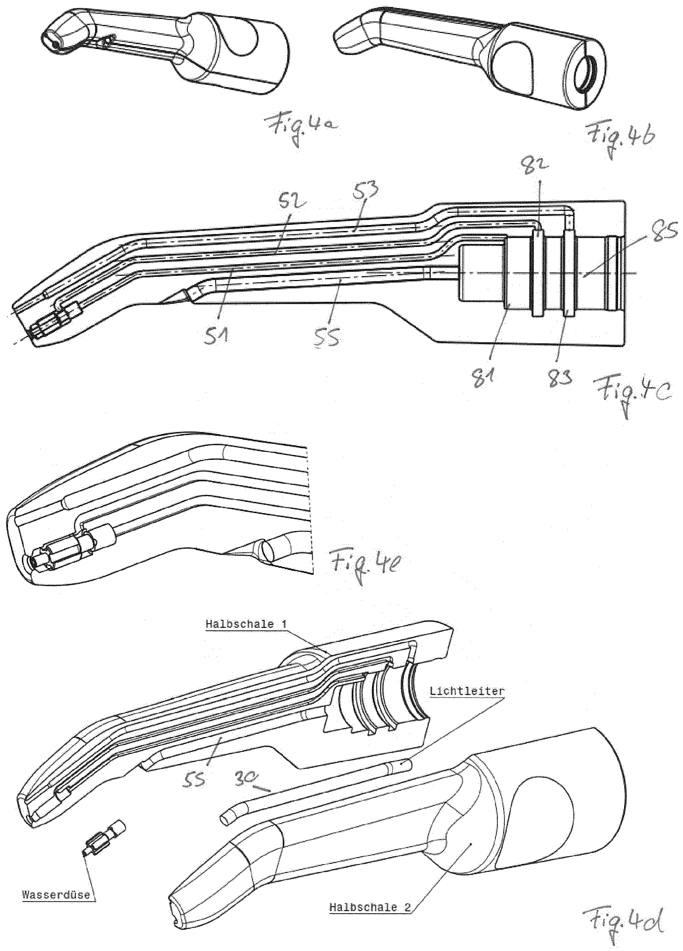

Auch bei der in den Figuren 4a - 4e dargestellten erfindungsgemäßen Variante ist die Nutzung eines Lichtleiters 30 vorgesehen. Dieser endet nunmehr allerdings in einem Umfangsbereich der sich in Längsrichtung erstreckenden Kanüle 100 und somit zurückversetzt im Vergleich zu den Abgabeöffnungen 72, 74 für die weiteren Medien. Auch in diesem Fall ist allerdings die Ausrichtung des Lichtleiters 30 am vorderen Ende 31 derart, dass das von ihm abgegebene Licht auf den Bereich gerichtet ist, auf den auch die Medien abgegeben werden. Da sich nunmehr der Lichtleiter 30 nicht bis zum vorderen Ende 70 der Kanüle 100 hin erstreckt, kann dieses im Vergleich zu der Variante gemäß den Figuren 3a - 3d etwas kompakter gestaltet werden, was ggf. zu einer besseren Sichtbarkeit des zu untersuchenden oder des zu behandelnden Bereichs führt.

Anzumerken ist, dass die Nutzung eines Lichtleiters wie anhand der Figuren 3 und 4 erläutert selbstverständlich auch bei der in Figur 1 gezeigten Kanüle vorgesehen sein könnte.

Bei den bislang besprochenen Ausführungsbeispielen der Figuren 1 - 4 wurde auch der Kopplungsbereich 80 mit Hilfe der beiden Kunststoffteilkörper 60a und 60b gebildet. Die Halbschalen 60a, 60b weisen dementsprechend auch die zur Medienübergabe vorgesehenen Ringkanäle 81 bis 83 auf bzw. bilden im zusammengefügten Zustand diese.

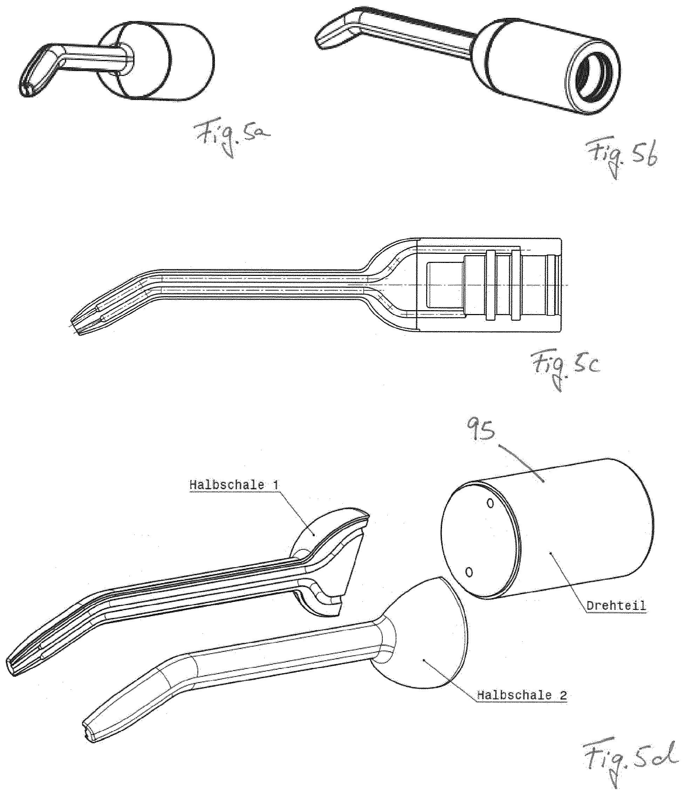

Es wäre allerdings auch denkbar, diesen Kopplungsbereich 80 anderweitig zu gestalten, wobei die Figuren 5a - 5d zunächst ein erstes Beispiel hierfür zeigen, bei dem der Kopplungsbereich durch ein separates Bauelement 95 gebildet ist, welches zylinderförmig ausgebildet und für die eigentliche Kopplung mit dem medizinischen Handstück vorgesehen ist. Auch in diesem Fall weist das separate Bauteil 95 einen zylinderförmigen Aufnahmebereich 85 mit entsprechenden Ringkanälen 81, 82 auf, der für die Kopplung mit dem Kopplungszapfen des Handstücks ausgebildet ist. Die in dem separaten Bauteil 95, welches bspw. als Drehteil realisiert werden kann, gebildeten Kanäle führen dann am vorderen Ende dieses Bauteils 95 zu entsprechenden Abgabeöffnungen 91, 92, die mit den eigentlichen Kanälen 51, 52 in dem Kunststoffkörper 50 der Kanüle 100 in Verbindung stehen. Der Kunststoffkörper 50 selbst wird mit seinem kreisförmigen Ende fest mit dem den Kopplungsbereich 80 bildenden Bauteil 95 verbunden, was bspw. wiederum durch Verkleben oder andere geeignete Maßnahmen erfolgen kann.

Hinsichtlich der Realisierung des sich in Längsrichtung erstreckenden Kanäle 51 und 52 gleicht auch dieses Beispiel den zuvor beschriebenen Ausführungsbeispielen. Wiederum sind also zwei Halbschalen 60a, 60b vorgesehen, die im zusammengefügten Zustand die Medienleitungen 11, 12 in Form von länglichen Kanälen 51, 52 bilden. Auch diese Variante kann analog zu den Varianten der Figuren 1 - 4 mit unterschiedlichen Anzahlen von Kanälen sowie ggf. mit einem Lichtleiter und dem Einlegeteil 25 realisiert werden.

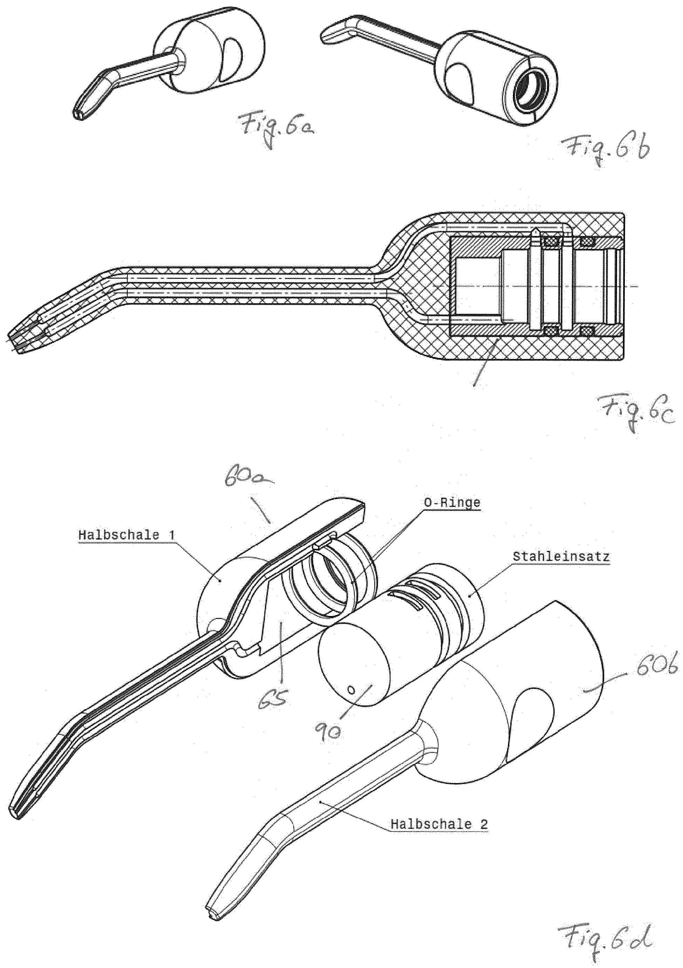

Figur 6 zeigt schließlich eine sechste Variante, die sich wiederum im Hinblick auf die Ausgestaltung des Kopplungsbereichs 80 unterscheidet. In diesem Fall erstreckt sich der Kunststoffkörper 50 wiederum über die gesamte Länge der Kanüle 100 hinweg, wobei allerdings nunmehr der für die eigentliche Kopplung mit dem Dentalhandstück vorgesehene Bereich durch einen Einsatz 90 realisiert wird, der in eine rein zylindrische Aufnahme des rückseitigen Kunststoffteils 50 eingeführt und dort bspw. mittels Verkleben oder dergleichen fixiert wird. Der Vorteil dieser Variante besteht darin, dass nochmals präziser eine Ausarbeitung der für die eigentliche Kopplung mit dem Handstück erforderlichen Bereiche der Kanüle 100 ermöglicht wird, sodass ggf. eine bessere und zuverlässigere Medienübergabe realisiert werden kann. Trotz allem sind die Ausführungsbeispiele der Figuren 1 - 4 zu bevorzugen, da diese mit Hilfe einer möglichst geringen Anzahl von Bauteilen realisiert werden können.

Die Kanüle kann abhängig von dem gewählten Material sowohl als Einwegartikel als auch als wiederverwendbares Produkt realisiert werden. Im Falle eines Einwegartikels könnte beispielsweise PE (Polyethylen) verwendet werden. Soll die Kanüle hingegen mehrfach verwendet und somit auch sterilisiert werden, würde sich die Verwendung eines beständigeren Kunststoffmaterials anbieten. Zu denken wäre in diesem Fall insbesondere an PA (Polyamid), PEEK (Polyetheretherketon) oder PSU (Polysulfon).

Insgesamt wird somit mit Hilfe der vorliegenden Erfindung eine Kanüle zur Abgabe von Medien zur Verfügung gestellt, welche in einfacher Weise realisiert werden kann und trotz allem die aus dem Stand der Technik bekannten Nachteile vermeidet. Ferner bestehen wie oben erläutert verschiedenste Möglichkeiten, die Ausgestaltung der Kanüle in einfacher Weise hinsichtlich der Anzahl der zu übermittelnden Medien entsprechend anzupassen.

## Patentansprüche

1. Dentalmedizinische Kanüle (100), welche ein Aufsatzstück für eine Dentalspritze zur Abgabe von fluiden Medien bildet, wobei die Kanüle (100) aufweist:
• einen rückseitigen Kopplungsbereich (80), der zur Kopplung mit einem zahnmedizinischen Handstück, welches die Medien zur Verfügung stellt, ausgebildet ist,
• einen vorderen Endbereich (70) mit mindestens einer Austrittsöffnung (71, 72, 74) zur Abgabe der fluiden Medien, sowie
• zumindest zwei sich von dem Kopplungsbereich (80) zum vorderen Endbereich (70) erstreckende, längliche Medienleitungen (11, 12) zum Führen der Medien von dem rückseitigen Kopplungsbereich zur Austrittsöffnung am vorderen Endbereich der Kanüle,
wobei die Medienleitungen (11, 12) zumindest abschnittsweise durch Kanäle (51, 52) in einem Kunststoffkörper (50) gebildet sind, der aus zwei jeweils einstückigen Kunststoffteilkörpern (60a, 60b) besteht, die entlang einer Verbindungsebene, in der die Kanäle (51, 52) verlaufen, abgedichtet miteinander verbunden sind,
wobei die zwei Medienleitungen (11, 12, 13) im vorderen Endbereich der Kanüle (100) in einer Mischkammer (20) zusammengeführt sind und in eine gemeinsame Austrittsöffnung (43) münden,
**dadurch gekennzeichnet, dass** im Bereich der Mischkammer (20) eine Düse (25) zum Vermischen der durch die beiden Medienleitungen übermittelten Medien angeordnet ist, welche durch ein separates Einlegeteil gebildet ist.

2. Dentalmedizinische Kanüle nach Anspruch 1,
**dadurch gekennzeichnet,**
**dass** die zwei Kunststoffteilkörper (60a, 60b) durch Halbschalen gebildet werden, vorzugsweise durch zwei bezüglich der Verbindungsebene symmetrisch ausgebildete Halbschalen.

3. Dentalmedizinische Kanüle nach Anspruch 1 oder 2,
**dadurch gekennzeichnet,**
**dass** die zwei Kunststoffteilkörper (60a, 60b) durch Spritzgusselemente gebildet sind.

4. Dentalmedizinische Kanüle nach einem der vorherigen Ansprüche,
**dadurch gekennzeichnet,**
**dass** die zwei Kunststoffteilkörper (60a, 60b) stoffschlüssig miteinander verbunden sind, insbesondere miteinander verklebt oder verschweißt sind, insbesondere durch Laserschweißen miteinander verbunden sind.

5. Dentalmedizinische Kanüle nach einem der vorherigen Ansprüche,
**dadurch gekennzeichnet,**
**dass** die Kanüle (100) in einem vorderen Abschnitt abgewinkelt ist.

6. Dentalmedizinische Kanüle nach einem der vorherigen Ansprüche,
**dadurch gekennzeichnet,**
**dass** sich entlang der Kanüle (100) drei Medienleitungen (11, 12, 13) erstrecken.

7. Dentalmedizinische Kanüle nach einem der vorherigen Ansprüche,
**dadurch gekennzeichnet,**
**dass** die Kanüle (100) einen Lichtleiter (30) aufweist, der sich ausgehend von dem Kopplungsbereich (70) zu einem vorderen Bereich der Kanüle (100) zur Lichtabgabe erstreckt, wobei der Lichtleiter (30) vorzugsweise durch ein separates Bauteil gebildet ist, welches in einen weiteren Kanal (55) des Kunststoffteils eingelegt ist.

8. Dentalmedizinische Kanüle nach Anspruch 7,
**dadurch gekennzeichnet,**
**dass** ein zur Lichtabgabe vorgesehenes Ende (31) des Lichtleiters (30) im Bereich der zumindest einen Austrittsöffnung (71, 72, 74) zur Abgabe der Medien angeordnet ist.

9. Dentalmedizinische Kanüle nach Anspruch 7,
**dadurch gekennzeichnet,**
**dass** ein zur Lichtabgabe vorgesehenes Ende (31) des Lichtleiters (30) an einem Außenumfangsbereich des Kunststoffkörpers (50) angeordnet und derart ausgerichtet ist, dass Licht auf eine Stelle, die der zumindest einen Austrittsöffnung (71, 72, 74) vorgeordnet ist, gerichtet wird.

10. Dentalmedizinische Kanüle nach einem der vorherigen Ansprüche,
**dadurch gekennzeichnet,**
**dass** der Kopplungsbereich (80) einen im Wesentlichen hohlzylinderartigen Aufnahmebereich (85) zur Aufnahme eines Kopplungszapfens des die Medien zur Verfügung stellenden Handstücks aufweist,
wobei vorzugsweise an der Innenwand des Aufnahmebereichs (85) ringartige Kanäle (81, 82, 83) ausgebildet sind, die jeweils in Fluidverbindung mit einem eine Medienleitung (11, 12, 13) bildenden Kanal (51, 52, 53) sind.

11. Dentalmedizinische Kanüle nach einem der vorherigen Ansprüche,
**dadurch gekennzeichnet,**
**dass** der Kopplungsbereich (80) durch die beiden miteinander verbundenen Kunststoffteilelemente (60a, 60b) gebildet und somit Bestandteil des Kunststoffkörpers (50) ist.

12. Dentalmedizinische Kanüle nach einem der Ansprüche 1 bis 10,
**dadurch gekennzeichnet,**
**dass** der Kopplungsbereich (80) durch ein separates Bauteil (95) gebildet ist, welches an einer Rückseite des die Medienleitungen (11, 12, 13) bildenden Kunststoffkörpers (50) angeordnet und mit diesem verbunden ist.

13. Verfahren zum Herstellen einer dentalmedizinischen Kanüle (100) welche ein Aufsatzstück für eine Dentalspritze zur Abgabe von fluiden Medien bildet, wobei die Kanüle (100) aufweist:
• einen rückseitigen Kopplungsbereich (80), der zur Kopplung mit einem zahnmedizinischen Handstück, welches die Medien zur Verfügung stellt, ausgebildet ist,
• einen vorderen Endbereich (70) mit mindestens einer Austrittsöffnung (71, 72, 74) zur Abgabe der fluiden Medien, sowie
• zumindest zwei sich von dem Kopplungsbereich (80) zum vorderen Endbereich (70) erstreckende, längliche Medienleitungen (11, 12) zum Führen der Medien von dem rückseitigen Kopplungsbereich zur Austrittsöffnung am vorderen Endbereich der Kanüle,
wobei das Verfahren die folgenden Schritte aufweist:
Herstellen von zwei jeweils einstückigen Kunststoffteilkörpern (60a, 60b);
Verbinden der beiden Kunststoffteilkörper (60a, 60b) entlang einer Verbindungsebene zum einem Kunststoffkörper (50), wobei im zusammengefügten Zustand entlang der Verbindungsebene in dem Kunststoffkörper (50) Kanäle (51, 52) verlaufen, welche die Medienleitungen bilden (11, 12),
wobei die zwei Medienleitungen (11, 12, 13) im vorderen Endbereich der Kanüle (100) in einer Mischkammer (20) zusammengeführt sind und in eine gemeinsame Austrittsöffnung (43) münden,
**dadurch gekennzeichnet, dass** im Bereich der Mischkammer (20) eine Düse (25) zum Vermischen der durch die beiden Medienleitungen übermittelten Medien angeordnet ist, welche durch ein separates Einlegeteil gebildet ist.

14. Verfahren nach Anspruch 13,
**dadurch gekennzeichnet,**
**dass** die zwei Kunststoffteilkörper (60a, 60b) durch Spritzgießen hergestellt werden.

15. Verfahren nach Anspruch 13 oder 14,
**dadurch gekennzeichnet,**
**dass** die zwei Kunststoffteilkörper (60a, 60b) stoffschlüssig miteinander verbunden werden, insbesondere miteinander verklebt oder verschweißt werden, insbesondere durch Laserschweißen miteinander verbunden sind.

## Claims

1. Dental cannula (100), which forms an attachment piece for a dental syringe for dispensing fluid media, wherein the cannula (100) has:
• a rear coupling region (80), which is designed for coupling to a dental handpiece that provides the media,
• a front end region (70) with at least one outlet opening (71, 72, 74) for dispensing the fluid media, and
• at least two elongate media lines (11, 12) extending from the coupling region (80) to the front end region (70), for guiding the media from the rear coupling region to the outlet opening at the front end region of the cannula,
wherein the media lines (11, 12) are formed, at least in some sections, by channels (51, 52) in a plastic body (50) which consists of two one-piece plastic parts (60a, 60b), which are sealingly connected to each other along a connection plane in which the channels (51, 52) run, wherein the two media lines (11, 12, 13) are brought together, in the front end region of the cannula (100), in a mixing chamber (20) and open into a common outlet opening (43),
**characterized in that**,
in the region of the mixing chamber (20), a nozzle (25), formed by a separate insert part, is arranged for mixing the media transferred through the two media lines.

2. Dental cannula according to Claim 1,
**characterized in that**
the two plastic parts (60a, 60b) are formed by half-shells, preferably by two half-shells that are symmetrical with respect to the connection plane.

3. Dental cannula according to Claim 1 or 2,
**characterized in that**
the two plastic parts (60a, 60b) are formed by injection moulding elements.

4. Dental cannula according to any one of the preceding claims,
**characterized in that**
the two plastic parts (60a, 60b) are cohesively connected to each other, in particular bonded or welded to each other, in particular connected to each other by laser welding.

5. Dental cannula according to any one of the preceding claims,
**characterized in that**
the cannula (100) is angled in a front section.

6. Dental cannula according to any one of the preceding claims,
**characterized in that**
three media lines (11, 12, 13) extend along the cannula (100).

7. Dental cannula according to any one of the preceding claims,
**characterized in that**
the cannula (100) has a light guide (30), which extends from the coupling region (70) to a front region of the cannula (100) for light emission, wherein the light guide (30) is preferably formed by a separate component which is inserted into a further channel (55) of the plastic part.

8. Dental cannula according to Claim 7,
**characterized in that**
a light-emitting end (31) of the light guide (30) is arranged in the region of the at least one outlet opening (71, 72, 74) for dispensing the media.

9. Dental cannula according to Claim 7,
**characterized in that**
a light-emitting end (31) of the light guide (30) is arranged on an outer circumferential region of the plastic body (50) and is oriented in such a way that light is directed to a location which is in front of the at least one outlet opening (71, 72, 74).

10. Dental cannula according to any one of the preceding claims,
**characterized in that**
the coupling region (80) has a substantially hollow-cylindrical receiving region (85) for receiving a coupling pin of the handpiece that provides the media, wherein ring-like channels (81, 82, 83) are preferably formed on the inner wall of the receiving region (85), which channels are each fluidically connected to a channel (51, 52, 53) forming a media line (11, 12, 13).

11. Dental cannula according to any one of the preceding claims,
**characterized in that**
the coupling region (80) is formed by the two interconnected plastic parts (60a, 60b) and is thus a constituent part of the plastic body (50).

12. Dental cannula according to any one of Claims 1 to 10,
**characterized in that**
the coupling region (80) is formed by a separate component (95), which is arranged on and connected to a rear face of the plastic body (50) forming the media lines (11, 12, 13).

13. Method for producing a dental cannula (100) which forms an attachment piece for a dental syringe for dispensing fluid media, wherein the cannula (100) has:
• a rear coupling region (80), which is designed for coupling to a dental handpiece that provides the media,
• a front end region (70) with at least one outlet opening (71, 72, 74) for dispensing the fluid media, and
• at least two elongate media lines (11, 12) extending from the coupling region (80) to the front end region (70), for guiding the media from the rear coupling region to the outlet opening at the front end region of the cannula,
wherein the method has the following steps:
producing two single-piece plastic parts (60a, 60b);
connecting the two plastic parts (60a, 60b) along a connection plane to form a plastic body (50), wherein, in the assembled state, channels (51, 52) run in the plastic body (50) along the connection plane and form the media lines (11, 12),
wherein the two media lines (11, 12, 13) are brought together, in the front end region of the cannula (100), in a mixing chamber (20) and open into a common outlet opening (43),
**characterized in that**,
in the region of the mixing chamber (20), a nozzle (25), formed by a separate insert part, is arranged for mixing the media transferred through the two media lines.

14. Method according to Claim 13,
**characterized in that**
the two plastic parts (60a, 60b) are produced by injection moulding.

15. Method according to Claim 13 or 14,
**characterized in that**
the two plastic parts (60a, 60b) are cohesively connected to each other, in particular bonded or welded to each other, in particular connected to each other by laser welding.

## Revendications

1. Canule dentaire (100) formant un embout pour un instrument dentaire d'injection destiné à distribuer des fluides, la canule (100) comprenant :
• une zone de raccordement de côté arrière (80), qui est conçue pour être raccordée à une pièce à main dentaire qui fournit les fluides,
• une zone d'extrémité avant (70) comprenant au moins une ouverture de sortie (71, 72, 74) pour distribuer les fluides, ainsi que
• au moins deux conduites de fluide allongées (11, 12) s'étendant de la zone de raccordement (80) à la zone d'extrémité avant (70) pour acheminer les fluides depuis la zone de raccordement de côté arrière vers l'orifice de sortie situé à l'extrémité avant de la canule,
les conduites de fluides (11, 12) étant formées au moins partiellement par des canaux (51, 52) dans un corps en matière plastique (50) qui est constitué de deux corps partiels en matière plastique (60a, 60b) respectivement d'un seul tenant, qui sont reliés entre eux de manière étanche le long d'un plan de liaison dans lequel s'étendent les canaux (51, 52),
les deux conduites de fluide (11, 12, 13) étant réunies dans une chambre de mélange (20) située dans la zone d'extrémité avant de la canule (100), et débouchant dans une ouverture de sortie commune (43),
**caractérisée en ce que**
dans la zone de la chambre de mélange (20) est agencée une buse (25) destinée à mélanger les fluides acheminés par les deux conduites de fluides, laquelle buse est formée par une pièce d'insertion séparée.

2. Canule dentaire selon la revendication 1,
**caractérisée**
**en ce que** les deux corps en matière plastique (60a, 60b) sont formés par des demi-coques, de préférence par deux demi-coques symétriques par rapport au plan de jonction.

3. Canule dentaire selon la revendication 1 ou la revendication 2,
**caractérisée**
**en ce que** les deux corps en matière plastique (60a, 60b) sont formés par des éléments moulés par injection.

4. Canule dentaire selon l'une des revendications précédentes,
**caractérisée**
**en ce que** les deux corps en matière plastique (60a, 60b) sont reliés l'un à l'autre par adhérence, en particulier collés ou soudés l'un à l'autre, en particulier reliés l'un à l'autre par soudage au laser.

5. Canule dentaire selon l'une des revendications précédentes,
**caractérisée**
**en ce que** la canule (100) est coudée dans une partie avant.

6. Canule dentaire selon l'une des revendications précédentes,
**caractérisée**
**en ce que** trois conduites de fluide (11, 12, 13) s'étendent le long de la canule (100).

7. Canule dentaire selon l'une des revendications précédentes,
**caractérisée**
**en ce que** la canule (100) comprend un guide de lumière (30) qui s'étend à partir de la zone de liaison (70) vers une zone avant de la canule (100) pour émettre de la lumière, le guide de lumière (30) étant de préférence formé par un composant séparé qui est inséré dans un autre canal (55) de la pièce en matière plastique.

8. Canule dentaire selon la revendication 7,
**caractérisée**
**en ce qu'**une extrémité (31) du guide de lumière (30) prévue pour l'émission de lumière est agencée dans la zone de ladite au moins une ouverture de sortie (71, 72, 74) pour l'émission des fluides.

9. Canule dentaire selon la revendication 7,
**caractérisée**
**en ce qu'**une extrémité (31) du guide de lumière (30) prévue pour l'émission de lumière est agencée sur une zone périphérique extérieure du corps en matière plastique (50) et est orientée de telle sorte que la lumière soit dirigée vers un emplacement situé en amont de ladite au moins une ouverture de sortie (71, 72, 74).

10. Canule dentaire selon l'une des revendications précédentes,
**caractérisée**
**en ce que** la zone de liaison (80) comprend une zone de réception (85) sensiblement cylindrique creuse, destinée à recevoir un tenon de liaison de la pièce à main fournissant les fluides,
des canaux annulaires (81, 82, 83) étant de préférence formés sur la paroi intérieure de la zone de réception (85), lesquels canaux sont chacun en communication fluidique avec un canal (51, 52, 53) formant une conduite de fluide (11, 12, 13).

11. Canule dentaire selon l'une des revendications précédentes,
**caractérisée**
**en ce que** la zone de liaison (80) est formée par les deux éléments en matière plastique (60a, 60b) reliés l'un à l'autre et fait ainsi partie intégrante du corps en matière plastique (50).

12. Canule dentaire selon l'une des revendications 1 à 10,
**caractérisée**
**en ce que** la zone de liaison (80) est formée par un composant séparé (95) qui est agencé sur un côté arrière du corps en matière plastique (50) formant les conduites de fluides (11, 12, 13) et relié à celui-ci.

13. Procédé de fabrication d'une canule dentaire (100) qui forme un embout pour un instrument dentaire d'injection destiné à distribuer des fluides, la canule (100) comprenant :
• une zone de raccordement de côté arrière (80), qui est conçue pour être raccordée à une pièce à main dentaire qui fournit les fluides,
• une zone d'extrémité avant (70) comprenant au moins une ouverture de sortie (71, 72, 74) pour distribuer les fluides, ainsi que
• au moins deux conduites de fluide allongées (11, 12) s'étendant de la zone de raccordement (80) à la zone d'extrémité avant (70) pour acheminer les fluides depuis la zone de raccordement de côté arrière vers l'orifice de sortie situé à l'extrémité avant de la canule,
le procédé comprenant les étapes suivantes :
fabrication de deux corps en matière plastique (60a, 60b) respectivement en une seule pièce ;
assemblage des deux corps en matière plastique (60a, 60b) le long d'un plan d'assemblage pour former un corps en matière plastique (50), des canaux (51, 52) s'étendant dans le corps en matière plastique (50) le long du plan d'assemblage à l'état assemblé et formant les conduites de fluide (11, 12),
les deux conduites de fluide (11, 12, 13) étant réunies dans une chambre de mélange (20) située dans la zone d'extrémité avant de la canule (100), et débouchant dans une ouverture de sortie commune (43),
**caractérisé en ce que**
dans la zone de la chambre de mélange (20) est agencée une buse (25) destinée à mélanger les fluides acheminés par les deux conduites de fluides, laquelle buse est formée par une pièce d'insertion séparée.

14. Procédé selon la revendication 13,
**caractérisé**
**en ce que** les deux corps en matière plastique (60a, 60b) sont fabriqués par moulage par injection.

15. Procédé selon la revendication 13 ou la revendication 14,
**caractérisé**
**en ce que** les deux corps en matière plastique (60a, 60b) sont reliés l'un à l'autre par adhérence de matière, en particulier collés ou soudés l'un à l'autre, en particulier reliés l'un à l'autre par soudage au laser.
